# EUROPEAN PATENT APPLICATION

(11) **EP 3 926 545 A1**
(43) Date of publication of application: **22.12.2021**
(21) Application number: 19921610.2
(22) Date of filing: 26.03.2019
(51) Int. Cl.: G06N 3/08

(54) **RELIABILITY ASSESSMENT DEVICE AND RELIABILITY ASSESSMENT METHOD**

(71) Applicant: MITSUBISHI ELECTRIC CORPORATION, Chiyoda-ku Tokyo 100-8310 (JP)
(72) Inventor: FUJINO, Tomoya, Tokyo 100-8310 (JP)
(74) Representative: Plasseraud IP
(86) International application number: PCT/JP2019/012877
(87) International publication number: WO 2020/194509

(57) **Abstract**

A reliability evaluation device includes: a training data storing unit (102) for storing training data constituted by a set of data and a label, the label being information relating to the data and assigned to identify an object to be identified; a learning unit (103) for performing a dropout process on a neural network model to be learned by applying a preset dropout parameter, repeating learning for classifying the label by using the training data, and performing iterative learning until the learning converges; a model reconstructing unit (105) for reconstructing a learned model in accordance with the dropout parameter and generating a plurality of different reconstructed models, the learned model being a neural network model for which the iterative learning has converged; an identification unit (107) for identifying the training data by using the generated reconstructed models, and estimating a label for each of the reconstructed models; and a classification determining unit (109) for evaluating a label of the training data on the basis of the estimated labels, and classifying the label of the training data.

## Description

### TECHNICAL FIELD

The present invention relates to a technology for evaluating the reliability of training data used for machine learning.

### BACKGROUND ART

In machine learning, training data to which correct information (hereinafter referred to as a label) on an object to be identified is assigned are used for learning so that an estimation result produced by a model in the course of learning and the label of the training data are identical to each other. For example, in a case where the species of an animal is to be identified through machine learning, a label relating to the species (dogs or cats, for example) of the animal on a photo is assigned to training data constituted by the photos of the animal. Thus, in order to generate a correct machine learning model, the correctness of the label of the training data is important. The work of assigning labels to an enormous quantity of training data requires lots of labor. In addition, the work of checking whether the assigned labels are correct also requires lots of labor. There have therefore been demands for efficiently evaluating the reliability of labels of training data.

For example, an information estimation apparatus disclosed in Patent Literature 1 determines, when data constituted by a multivariate distribution are input to an integrated layer, a data type of each vector element of data output from the integrated layer on the basis of a numerical distribution of terms each formed by a product of each vector element of the input data and a weight. The information estimation apparatus applies an approximate computation method associated with the determined data type, to analytically compute a variance of each vector element of the data output from the integrated layer on the basis of the data input to the integrated layer.

According to the technology described in Patent Literature 1, sequential computation of temporary estimation results in the course of machine learning is used for comparison between the temporary estimation results at different time points, and estimated values that vary widely are determined not to be reliable.

In addition, an identification information assigning system disclosed in Patent Literature 2 uses information on two or more learning results that have acquired classification ability through machine learning and a determination condition enabling determination on whether classification results output from two or more learning results are equivalent to each other, to determine whether or not at least two of the classification results output from two or more learning results are equivalent to each other, and assigns the same label to the classification results that are determined to be equivalent to each other.

### CITATION LIST

### PATENT LITERATURES

Patent Literature 1: JP 2018-106463 A
Patent Literature 2: JP 2018-045483 A

### SUMMARY OF INVENTION

### TECHNICAL PROBLEM

The technology disclosed in Patent Literature 1 enables extraction of training data with which temporary estimation results in the course of learning vary widely. There is, however, a problem in that the variation in estimation results indicates the difficulty of identification of training data, and does not necessarily indicates the reliability of a label.

In addition, for the technology disclosed in Patent Literature 2, a plurality of kinds of models need to be provided. Because learning of models in machine learning requires considerable computational resources and processing time, there is a problem in that preparations for a plurality of kinds of models are inefficient.

An object of the present invention is to efficiently generate a plurality of kinds of models, and evaluate the reliability of a label of training data in addition to the difficulty in identifying the training data.

### SOLUTION TO PROBLEM

A reliability evaluation device according to the present invention includes: a training data storing unit for storing training data constituted by a set of data and a label, the label being information relating to the data and assigned to identify an object to be identified; a learning unit for performing a dropout process on a neural network model to be learned by applying a preset dropout parameter, repeating learning for classifying the label by using the training data, and performing iterative learning until the learning converges; a model reconstructing unit for reconstructing a learned model in accordance with the dropout parameter and generating a plurality of different reconstructed models, the learned model being a neural network model for which the iterative learning performed by the learning unit has converged; an identification unit for identifying the training data by using the reconstructed models generated by the model reconstructing unit, and estimating a label for each of the reconstructed models; and a classification determining unit for evaluating a label of the training data on the basis of the estimated labels obtained by the estimation by the identification unit, and classifying the label of the training data.

### ADVANTAGEOUS EFFECTS OF INVENTION

According to the present invention, a plurality of kinds of models can be efficiently generated, and the reliability of a label of training data can be evaluated in addition to the difficulty in identifying the training data.

### BRIEF DESCRIPTION OF DRAWINGS

FIG. 1 is a block diagram illustrating a configuration of a reliability evaluation device according to a first embodiment.
FIG. 2 is a table illustrating an example of training data stored in a training data database of the reliability evaluation device according to the first embodiment.
FIG. 3 is a table illustrating an example of a trained model stored in a learned model storing unit of the reliability evaluation device according to the first embodiment.
FIG. 4 is a diagram illustrating an example of a configuration of a neural network of the reliability evaluation device according to the first embodiment.
FIG. 5 is a table illustrating an example of reconstructed models stored in a reconstructed model storing unit of the reliability evaluation device according to the first embodiment.
FIG. 6 is a table illustrating an example of estimated label information stored in an estimated label information storing unit of the reliability evaluation device according to the first embodiment.
FIG. 7 is a table illustrating an example of a validity determination result stored in a determination result storing unit of the reliability evaluation device according to the first embodiment.
FIG. 8 is a diagram illustrating an example of display based on display control of a visualization unit of the reliability evaluation device according to the first embodiment.
FIGS. 9A and 9B are diagrams illustrating examples of hardware configurations of the reliability evaluation device according to the first embodiment.
FIG. 10 is a flowchart illustrating the operation of the reliability evaluation device according to the first embodiment.
FIG. 11 is a flowchart illustrating the operation of a training unit of the reliability evaluation device according to the first embodiment.
FIG. 12 is a flowchart illustrating the operation of a model reconstructing unit of the reliability evaluation device according to the first embodiment.
FIG. 13 is a flowchart illustrating the operation of an identification unit of the reliability evaluation device according to the first embodiment.
FIG. 14 is a flowchart illustrating the operation of a classification determining unit of the reliability evaluation device according to the first embodiment.
FIG. 15 is a flowchart illustrating the operation of the visualization unit of the reliability evaluation device according to the first embodiment.

### DESCRIPTION OF EMBODIMENTS

An Embodiment for carrying out the invention will now be described with reference to the accompanying drawings for more detailed explanation of the invention.

### First Embodiment.

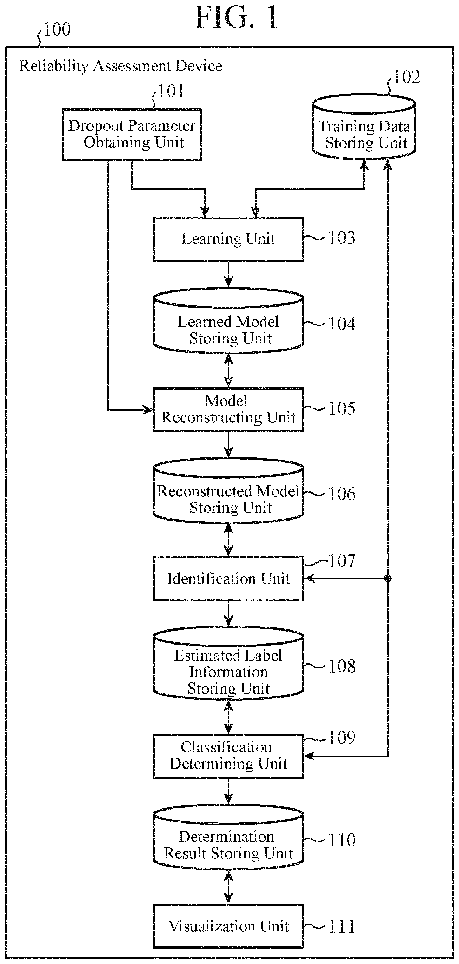

FIG. 1 is a block diagram illustrating a configuration of a reliability evaluation device 100 according to a first embodiment.

The reliability evaluation device 100 according to the first embodiment is a device that evaluates the reliability of labels assigned to training data in machine learning using a neural network. Note that the neural network is a machine learning model constituted by nodes arranged on a plurality of layers, links connecting the nodes, and parameters assigned to the links. The neural network is defined in the following Non-Patent Literature 1, for example.

### • Non-Patent Literature 1:

C. M. Bishop, Hiroshi Motoda (Translation Supervisor), "Pattern Recognition and Machine Learning; First Volume", Maruzen Publishing, pp. 225-247.

As illustrated in FIG. 1, the reliability evaluation device 100 includes a dropout parameter obtaining unit 101, a training data storing unit 102, a learning unit 103, a learned model storing unit 104, a model reconstructing unit 105, a reconstructed model storing unit 106, an identification unit 107, an estimated label information storing unit 108, a classification determining unit 109, a determination result storing unit 110, and a visualization unit 111.

The dropout parameter obtaining unit 101 obtains a dropout parameter, and outputs the obtained dropout parameter to the learning unit 103 and the model reconstructing unit 105, which will be described later. The dropout parameter specifies the rate of dropouts in the course of learning using the neural network, and is given a numerical value of "0.2", for example. A dropout is a process of learning by randomly selecting nodes in the neural network at a constant rate and temporally disabling the selected nodes in the course of learning. A dropout reduces overfitting that is fitting too much to training data and thus lowering the accuracy of estimation with other data. For example, a dropout is proposed in the following Non-Patent Literature 2.

### • Non-Patent Literature 2

G. Hinton and G. Dahl, "Dropout: A simple and effective way to improve neural networks," in Advances in Neural Information Processing Systems, 2012.

The training data storing unit 102 is an area for storing training data. The training data are data constituted by a set of identification IDs of individual data such as images, labels, and multidimensional data such as pixel values. A label is information relating to data such as an image, and assigned to identify an object to be identified.

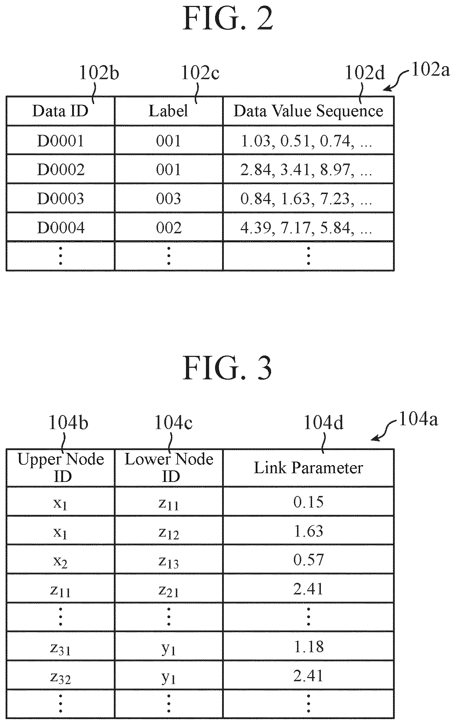

FIG. 2 is a table illustrating an example of training data stored in the training data storing unit 102 of the reliability evaluation device 100 according to the first embodiment.

The training data 102a are constituted by "data IDs" of an item 102b, "labels" of an item 102c, and "data value sequences" of an item 102d.

The learning unit 103 performs learning on a neural network model to be learned. The learning unit 103 performs a process of learning by randomly selecting nodes in the neural network at a constant rate and temporally disabling the selected nodes (hereinafter referred to as a dropout process; refer to Non-Patent Literature 2) on all the data IDs included in the stored training data on the basis of the dropout parameter input from the dropout parameter obtaining unit 101. In addition, the learning unit 103 learns the neural network for classifying labels by using the training data stored in the training data storing unit 102.

The learning unit 103 repeats the learning of the neural network until the learning converges. The definition of the neural network and details of the learning are as described in Non-Patent Literature 1. The learning unit 103 stores the neural network model after the learning converged as a learned model M in the learned model storing unit 104.

The learned model storing unit 104 is an area in which the learned model M, which is the neural network learned by the learning unit 103, is stored.

FIG. 3 is a table illustrating an example of the learned model M stored in the learned model storing unit 104 of the reliability evaluation device 100 according to the first embodiment.

The learned model 104a is constituted by "upper layer node IDs" of an item 104b, "lower layer node IDs" of an item 104c, and "link parameters" of an item 104d. In the description of the item 104b and the item 104c, "xi" represents an i-th node on an input layer, "zij" represents an i-th node on a j-th intermediate layer, and "yi" represents an i-th node on an output layer. Specifically, in FIG. 3, "x₁" represents a first node on the input layer. In addition, in FIG. 3, "z₁₁" represents a first node on a first intermediate layer. In addition, in FIG. 3, "y₁" represents a first node on the output layer.

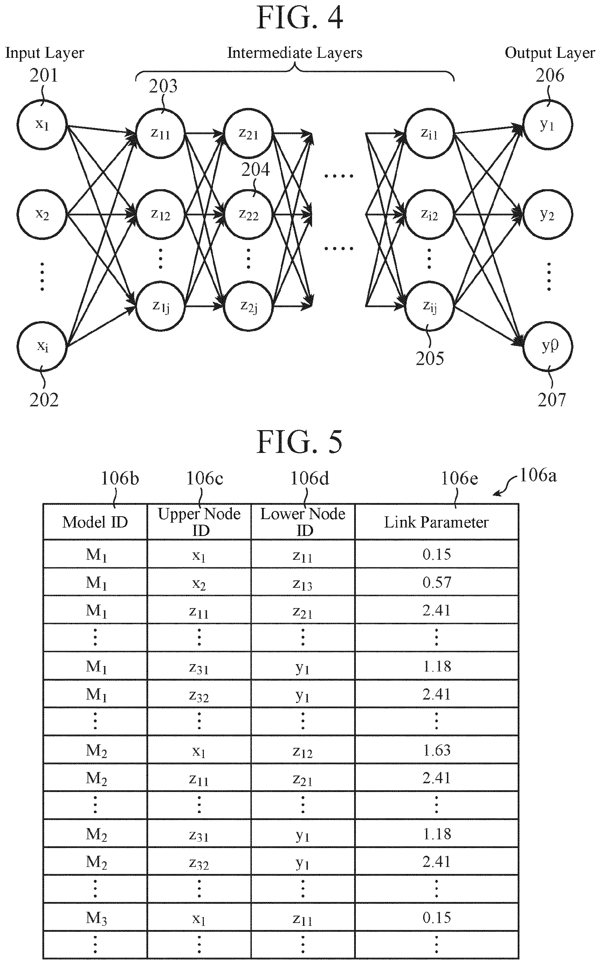

FIG. 4 is a diagram illustrating an example of a configuration of the neural network of the reliability evaluation device 100 according to the first embodiment.

The neural network is constituted by the input layer x, a plurality of intermediate layers z, which are hidden layers, and the output layer y. In FIG. 4, i represents the number of nodes, and j represents the number of intermediate layers. A first node 201 on the input layer is represented by "x₁", and an i-th node 202 on the input layer is represented by "xᵢ". A first node 203 on a first one of the intermediate layers is represented by "z₁₁", a second node 204 on a second one of the intermediate layers is represented by "z₂₂", and a j-th node 205 on an i-th one of the intermediate layers is represented by "zᵢⱼ". A second node 206 on the output layer is represented by "yi", and an i-th node 207 on the output layer is represented by "yi".

The model reconstructing unit 105 randomly performs the dropout process specified by the dropout parameter input from the dropout parameter obtaining unit 101 on the basis of the learned model M stored in the learned model storing unit 104 and generates a reconstructed model Mi (i=1, 2,..., N_{M}).

More specifically, the model reconstructing unit 105 randomly selects nodes of the learned model M at a rate specified by the dropout parameter and disables the selected nodes. The model reconstructing unit 105 sets the disabled model as a reconstructed model Mi. The model reconstructing unit 105 repeats this process while changing the nodes to be disabled, to generate a plurality of reconstructed models Mi. The model reconstructing unit 105 stores the generated reconstructed models Mi in the reconstructed model storing unit 106.

The reconstructed model storing unit 106 is an area in which the reconstructed models Mi generated by the model reconstructing unit 105 are stored. The reconstructed model storing unit 106 assigns a new model ID to each reconstructed model Mi, and stores and manages the reconstructed models Mi.

FIG. 5 is a table illustrating an example of the reconstructed models Mi stored in the reconstructed model storing unit 106 of the reliability evaluation device 100 according to the first embodiment.

The reconstructed model 106a is constituted by "model IDs" of an item 106b, "upper layer node IDs" of an item 106c, "lower layer node IDs" of an item 106d, and "link parameters" of an item 106e. The example of FIG. 5 illustrates that reconstructed models Mi with a model ID "M₁", a model ID "M₂", and a model ID "M₃" are generated.

The identification unit 107 identifies training data stored in the training data storing unit 102 on the basis of the reconstructed models Mi stored in the reconstructed model storing unit 106. The identification unit 107 obtains an index value Pᵢⱼ (j=1, 2,..., the number of labels) for each label in the reconstructed model Mi at the time when the training data have been identified. The identification unit 107 refers to the obtained index values Pᵢⱼ for individual labels, and obtains a label that gives the largest index value Pᵢⱼ. The identification unit 107 sets the obtained label that gives the largest index value Pᵢⱼ as an estimated label Li. The identification unit 107 generates estimated label information including a model ID, a data ID, an estimated label Li and an index value Pᵢⱼ for each label, which are associated with each other. The identification unit 107 stores the generated estimated label information in the estimated label information storing unit 108.

The estimated label information storing unit 108 is an area in which the estimated label information generated by the identification unit 107 is stored.

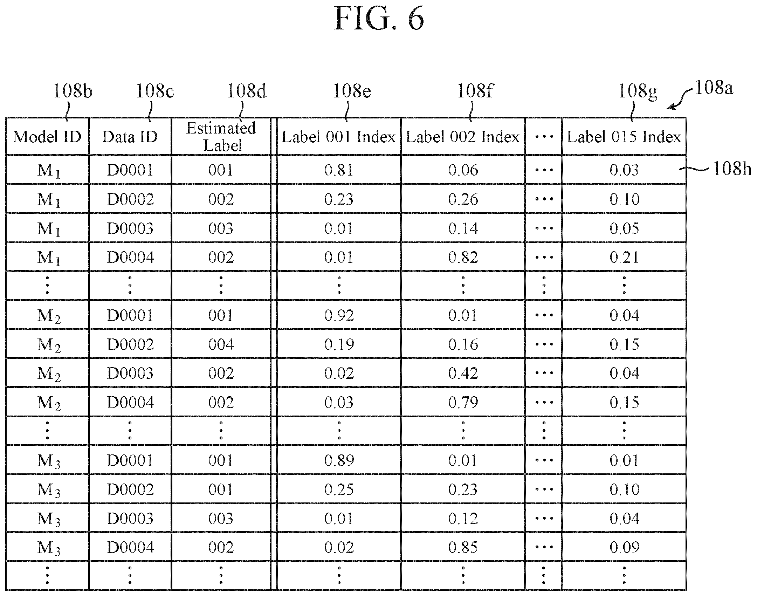

FIG. 6 is a table illustrating an example of the estimated label information stored in the estimated label information storing unit 108 of the reliability evaluation device 100 according to the first embodiment.

The estimated label information 108a is constituted by "model IDs" of an item 108b, "data IDs" of an item 108c, "estimated labels" of an item 108d, "label 001 indices" of an item 108e, "label 002 indices" of an item 108f,..., and "label 015 indices" of an item 108g. The example of FIG. 6 illustrates estimated label information in a case where labels are 001 to 015. In addition, estimated label information 108h in FIG. 6 illustrates that an estimated label "001" is obtained when the data ID "D001" of training data is identified on the basis of the model ID "Mi" of a reconstructed model. In addition, indices of the obtained labels 001 to 015 in the reconstructed model Mi obtained when the identification unit 107 performed the identification.

The classification determining unit 109 evaluates the reliability of the label of each data ID on the basis of the estimated label information stored in the estimated label information storing unit 108 and a label specified by the training data stored in the training data storing unit 102. The classification determining unit 109 tests a ratio difference and distribution identity on the difference in the index values Pᵢⱼ of individual labels among a plurality of reconstructed models Mi when evaluating the reliability of labels. The classification determining unit 109 tests the ratio difference for the purpose of checking that the differences between a label set in the training data and the other labels are significantly large. The classification determining unit 109 tests the distribution identity for the purpose of checking whether or not there is a difference in the distribution of index values Pᵢⱼ for individual labels among the reconstructed models Mi. Note that the method described in the following Non-Patent Literature 3 is applied to the ratio difference test and the distribution identity test (Kolmogorov-Smirnov test).

### • Non-Patent Literature 3

Shinsuke Muto, "Statistics and Analysis Handbook", Asakura Publishing Co., Ltd., pp. 174-175,450-451.

The classification determining unit 109 classifies the validity of a label specified in the training data depending on the result of the ratio difference test and the distribution identity test. The classification determining unit 109 stores the result of classification as a validity determination result in the determination result storing unit 110.

The determination result storing unit 110 is an area for storing the validity determination result obtained by the classification determining unit 109 by classifying the validity of the label specified in the training data.

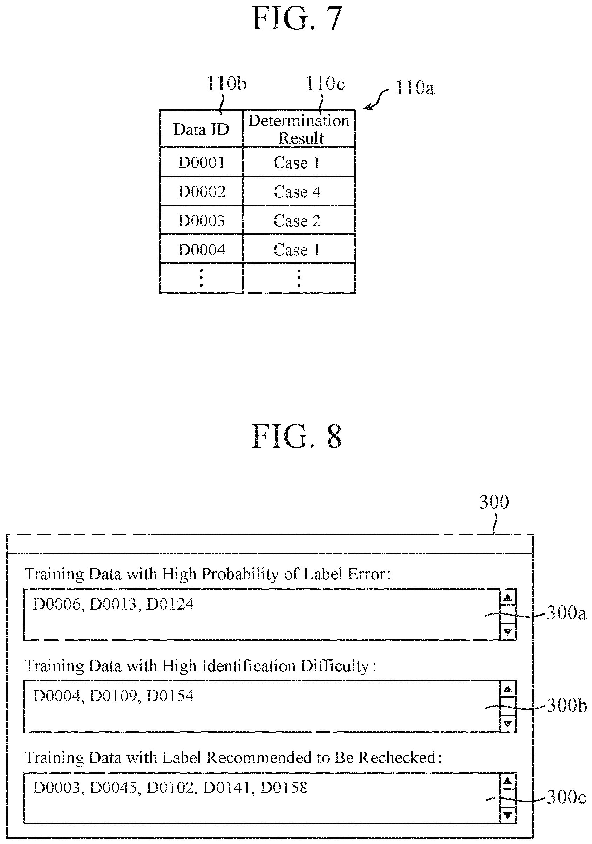

FIG. 7 is a table illustrating an example of the validity determination result stored in the determination result storing unit 110 of the reliability evaluation device 100 according to the first embodiment.

The validity determination result 110a is constituted by "data IDs" of an item 110b, and "determination results" of an item 110c. For example, in the example of FIG. 7, a case where the "determination results" of the item 110c are classified as "Case 1", "Case 2", "Case 3", "Case 4", and the like is illustrated.

The visualization unit 111 performs display control to prompt processing of training data on the basis of the validity determination result stored in the determination result storing unit 110. The visualization unit 111 performs display control to display the training data as being training data with high probability of label error, training data with high identification difficulty, or training data with a label recommended to be rechecked, depending on the validity determination result.

FIG. 8 is a diagram illustrating an example of display based on the display control of the visualization unit 111 of the reliability evaluation device 100 according to the first embodiment.

FIG. 8 illustrates a case where training data are classified into three kinds, which are training data with high probability of label error, training data with high identification difficulty, and training data with a label recommended to be rechecked, and displayed by display control performed by the visualization unit 111. A display area 300a for training data with high probability of label error, a display area 300b for training data with high identification difficulty, and a display area 300c for training data with a label recommended to be rechecked are displayed on a display device 300. The data IDs of the associated training data are displayed in the display areas 300a, 300b, and 300c.

Next, examples of hardware configurations of the reliability evaluation device 100 will be described.

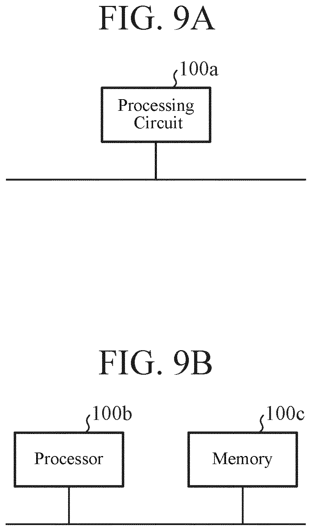

FIGS. 9A and 9B are diagrams illustrating examples of hardware configurations of the reliability evaluation device 100 according to the first embodiment.

The functions of the dropout parameter obtaining unit 101, the learning unit 103, the model reconstructing unit 105, the identification unit 107, the classification determining unit 109, and the visualization unit 111 in the reliability evaluation device 100 are implemented by processing circuitry. Specifically, the reliability evaluation device 100 includes processing circuitry for implementing the individual functions. The processing circuitry may be a processing circuit 100a, which is dedicated hardware, as illustrated in FIG. 9A, or may be a processor 100b that executes programs stored in a memory 100c as illustrate in FIG. 9B.

As illustrated in FIG. 9A, in a case where the dropout parameter obtaining unit 101, the learning unit 103, the model reconstructing unit 105, the identification unit 107, the classification determining unit 109, and the visualization unit 111 are implemented by dedicated hardware, the processing circuit 100a is a single circuit, a composite circuit, a programmed processor, a parallel-programmed processor, an application specific integrated circuit (ASIC), a field-programmable gate array (FPGA), or a combination thereof, for example. Each of the functions of the dropout parameter obtaining unit 101, the learning unit 103, the model reconstructing unit 105, the identification unit 107, the classification determining unit 109, and the visualization unit 111 may be implemented by a processing circuit, or the functions of the units may be integrated into one processing circuit.

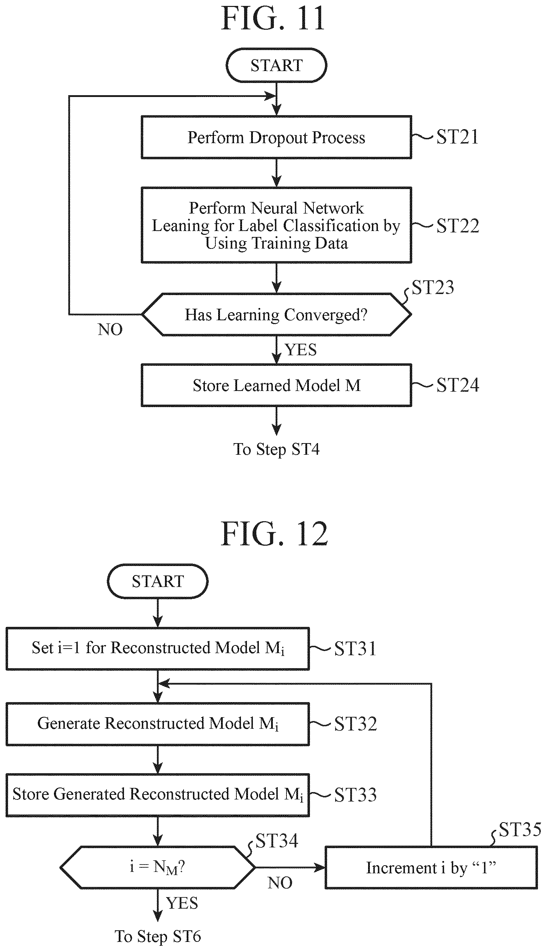

As illustrated in FIG. 9B, in a case where the dropout parameter obtaining unit 101, the learning unit 103, the model reconstructing unit 105, the identification unit 107, the classification determining unit 109, and the visualization unit 111 are the processor 100b, the functions of the individual units are implemented by software, firmware, or combination of software and firmware. The software or firmware is described in the form of programs and stored in the memory 100c. The processor 100b implements each of the functions of the dropout parameter obtaining unit 101, the learning unit 103, the model reconstructing unit 105, the identification unit 107, the classification determining unit 109, and the visualization unit 111 by reading and executing a program stored in the memory 100c. Thus, the dropout parameter obtaining unit 101, the learning unit 103, the model reconstructing unit 105, the identification unit 107, the classification determining unit 109, and the visualization unit 111 include the memory 100c for storing programs to be executed by the processor 100b, which results in execution of steps illustrated in FIGS. 11 to 15, which will be described later. These programs can also be said to cause a computer to execute the procedures or methods of the dropout parameter obtaining unit 101, the learning unit 103, the model reconstructing unit 105, the identification unit 107, the classification determining unit 109, and the visualization unit 111.

Note that the processor 100b is a central processing unit, (CPU), a processing unit, a computing unit, a processor, a microprocessor, a microcomputer, or a digital signal processor (DSP), for example.

The memory 100c may be a nonvolatile or volatile semiconductor memory such as a random access memory (RAM), a read only memory (ROM), a flash memory, an erasable programmable ROM (EPROM), or an electrically EPROM (EEPROM), a magnetic disk such as a hard disk, or a flexible disk, an optical disk such as a mini disc, a compact disc (CD), or a digital versatile disc (DVD), for example.

Alternatively, some of the functions of the dropout parameter obtaining unit 101, the learning unit 103, the model reconstructing unit 105, the identification unit 107, the classification determining unit 109, and the visualization unit 111 may be implemented by dedicated hardware, and others may be implemented by software or firmware. As described above, the processing circuit 100a in the reliability evaluation device 100 is capable of implementing the functions described above by hardware, software, firmware, or a combination thereof.

Next, the operation of the reliability evaluation device 100 will be explained.

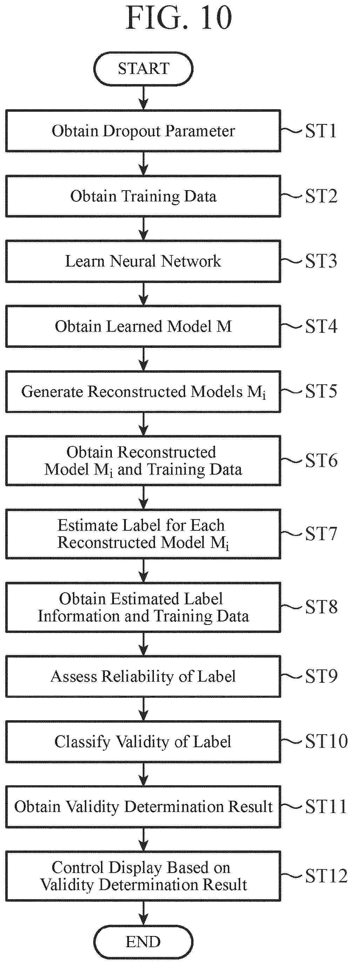

FIG. 10 is a flowchart illustrating the operation of the reliability evaluation device 100 according to the first embodiment.

The dropout parameter obtaining unit 101 obtains a preset dropout parameter (step ST1). The dropout parameter obtaining unit 101 outputs the obtained dropout parameter to the learning unit 103 and the model reconstructing unit 105. The learning unit 103 obtains training data from the training data storing unit 102 (step ST2). The learning unit 103 performs a dropout process on a neural network model to be learned, and learns the neural network by using the training data obtained in step ST2 (step ST3). The learning unit 103 performs iterative learning, that is, repeating the process in step ST3 until the learning converges. The learning unit 103 stores a learned model M in the learned model storing unit 104.

The model reconstructing unit 105 obtains the learned model M stored in the learned model storing unit 104 (step ST4). The model reconstructing unit 105 randomly performs the dropout process on the obtained learned model M to generate a plurality of reconstructed models Mi (step ST5). The model reconstructing unit 105 stores the generated reconstructed models Mi in the reconstructed model storing unit 106.

The identification unit 107 obtains a reconstructed model Mᵢ stored in the reconstructed model storing unit 106 and training data stored in the training data storing unit 102 (step ST6). The identification unit 107 performs, for each obtained reconstructed model Mᵢ, label estimation on data associated with each data ID of the obtained training data (step ST7). The identification unit 107 stores the result of the label estimation in step ST7 as estimated label information in the estimated label information storing unit 108.

The classification determining unit 109 obtains estimated label information stored in the estimated label information storing unit 108, and training data stored in the training data storing unit 102 (step ST8). The classification determining unit 109 evaluates the reliability of the label of each data ID on the basis of the estimated label information obtained in step ST8 and a label specified in the training data (step ST9). The classification determining unit 109 classifies the validity of a label specified in the training data depending on the result of the reliability evaluation obtained in step ST9 (step ST10). The classification determining unit 109 stores the result of classification as a validity determination result in the determination result storing unit 110.

The visualization unit 111 obtains the validity determination result from the determination result storing unit 110 (step ST11). The visualization unit 111 performs display control based on the validity determination result obtained in step ST11 (step ST12), and terminates the process.

Next, details of the process in step ST3 of the flowchart of FIG. 10 will be explained.

FIG. 11 is a flowchart illustrating the operation of the learning unit 103 of the reliability evaluation device 100 according to the first embodiment.

The learning unit 103 first performs the dropout process of disabling nodes in the neural network in accordance with the dropout parameter on the neural network model to be learned (step ST21). Subsequently, the learning unit 103 performs neural network learning for label classification by using the training data (step ST22). The learning unit 103 determines whether or not the learning has converged (step ST23). If the learning has not converged (step ST23; NO), the learning unit 103 returns to the process in step ST21, and repeats the process described above.

In contrast, if the learning has converged (step ST23; YES), the learning unit 103 stores the learned neural network model as a learned model M in the learned model storing unit 104 (step ST24). Subsequently, the flowchart proceeds to the process in step ST4 of the flowchart of FIG. 10.

Next, details of the process in step ST5 of the flowchart of FIG. 10 will be explained.

FIG. 12 is a flowchart illustrating the operation of the model reconstructing unit 105 of the reliability evaluation device 100 according to the first embodiment.

The model reconstructing unit 105 sets i=1 for a reconstructed model Mᵢ (i=1, 2,..., N_{M}) to be generated (step ST31). The model reconstructing unit 105 randomly applies the dropout process on the obtained learned model M in accordance with the dropout parameter input from the dropout parameter obtaining unit 101 to generate a reconstructed model Mi (step ST32). The model reconstructing unit 105 stores the reconstructed model Mi generated in step ST32 in the reconstructed model storing unit 106 (step ST33).

The model reconstructing unit 105 determines whether or not i is equal to a preset number N_{M} of times of output of the reconstructed model Mi (step ST34). If i is not equal to the number N_{M} of times of output (step ST34; NO), the model reconstructing unit 105 increments i by "1" (step ST35), and returns to the process in step ST32. In contrast, if i is equal to the number N_{M} of times of output (step ST34; YES), the flowchart proceeds to the process in step ST6 in FIG. 10.

Note that, in the ratio difference test and the distribution identity test, 79 or more kinds of models are needed for testing at a significance level of 99.9% and a power of test of 99.9%, for example. The model reconstructing unit 105 performs the iterative process described above, which enables generation of 79 or more kinds of models in a practical time.

Next, details of the process in step ST7 of the flowchart of FIG. 10 will be explained.

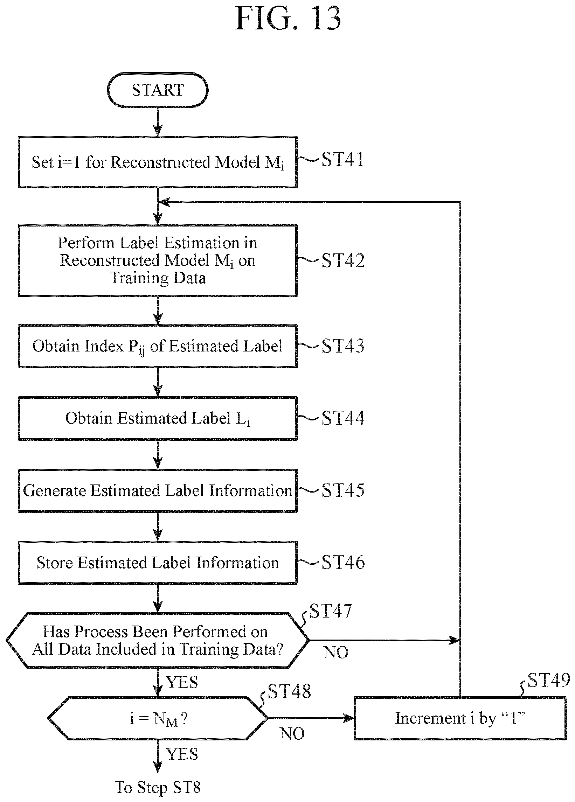

FIG. 13 is a flowchart illustrating the operation of the identification unit 107 of the reliability evaluation device 100 according to the first embodiment.

The identification unit 107 sets i=1 for a reconstructed model Mᵢ (i=1, 2,..., N_{M}) (step ST41). The identification unit 107 performs label estimation, for the reconstructed model Mi set in step ST41, on data associated with a data ID included in the training data (step ST42). The identification unit 107 obtains an index value Pij (j=1, 2,..., N_{L}) indicating which of the N_{L} kinds of labels the label estimated in step ST42 is likely to correspond to (step ST43). The identification unit 107 refers to the index value Pij obtained in step ST43, and obtains an estimated label Li that gives the largest value (step ST44).

The identification unit 107 generates estimated label information including the reconstructed model Mi, the data ID of the training data, the estimated label Li, and the index value Pij, which are associated with each other (step ST45). The identification unit 107 stores the estimated label information generated in step ST45 in the estimated label information storing unit 108 (step TS46). The identification unit 107 determines whether or not the process has been performed on all the data included in the training data (step ST47). If the process has not been performed on all the data included in the training data (step ST47; NO), the flowchart returns to the process in step ST42, and repeats the process described above.

In contrast, if the process has been performed on all the data included in the training data (step ST47; YES), the identification unit 107 determines whether or not i is equal to the preset number N_{M} of times of output (step ST48). If i is not equal to the number N_{M} of times of output (step ST48; NO), the identification unit 107 increments i by "1" (step ST49), returns to the process in step ST42 and repeats the process described above. In contrast, if i is equal to the number N_{M} of times of output (step ST48; YES), the identification unit 107 proceeds to the process in step ST8 in the flowchart of FIG. 10.

Next, details of the process in steps ST9 and ST10 of the flowchart of FIG. 10 will be explained.

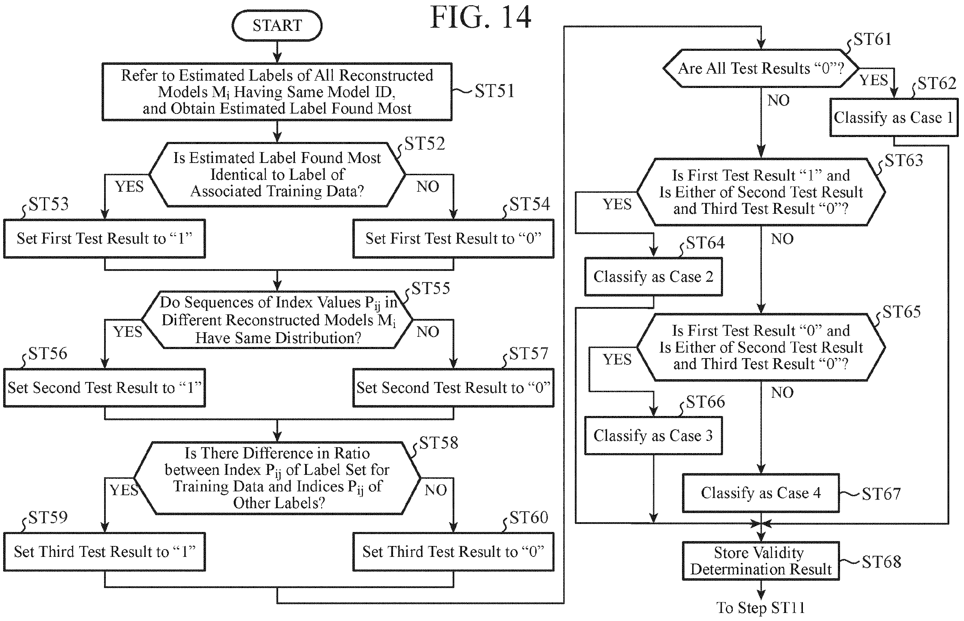

FIG. 14 is a flowchart illustrating the operation of the classification determining unit 109 of the reliability evaluation device 100 according to the first embodiment.

The classification determining unit 109 refers to the estimated label information, refers to the estimated labels in all reconstructed models Mi having the same model ID, and obtains the estimated label found the most (step ST51). The classification determining unit 109 determines whether or not the estimated label found the most obtained in step ST51 is identical to the label of the same data ID in the associated training data (step ST52).

If the estimated label found the most is identical to the label of the associated training data (step ST52; YES), the classification determining unit 109 sets a first test result to "1" (step ST53). In contrast, if the estimated label found the most is not identical to the label of the associated training data (step ST52; NO), the classification determining unit 109 sets the first test result to "0" (step ST54).

Subsequently, the classification determining unit 109 determines whether or not the sequences of index values Pᵢⱼ ({Pᵢ₁ⱼ}, {Pᵢ₂ⱼ}, for example) in different reconstructed models Mᵢ (Mᵢ₁ and Mᵢ₂ (i1≠i2), for example) have the same distribution (step ST55). Note that the determination in step ST55 is a test using the distribution identity test (Kolmogorov-Smirnov test, for example). If the sequences of index values Pij in different reconstructed models Mi have the same distribution (step ST55; YES), the classification determining unit 109 sets a second test result to "1" (step ST56). If the sequences of index values Pij in different reconstructed models Mi do not have the same distribution (step ST55; NO), the classification determining unit 109 sets the second test result to "0" (step ST57).

The classification determining unit 109 further determines whether or not there is a difference in ratio between the index value Pij of the label set for the training data and the index values Pij of the other labels (step ST58). If there is a ratio difference (step ST58; YES), the classification determining unit 109 sets a third test result to "1" (step ST59). If there is no ratio difference (step ST58; NO), the classification determining unit 109 sets the third test result to "0" (step ST60).

In the determination of distribution identity in step ST55 and the determination of ratio difference in step ST58, both of the determinations are made at a significance level specified to 99.9%, for example. In addition, values corresponding to a denominator and a numerator of a ratio are needed for the determination of distribution identity in step ST55 and the determination of ratio difference in step ST58. Values obtained by converting the total number of samples as the numbers of records of training data stored in the training data storing unit 102 and the indices of the training data into a ratio are used as the denominator and the numerator of the ratio.

The classification determining unit 109 refers to the first test result, the second test result, and the third test result, to determine whether or not all the test results are "0" (step ST61). If all the test results are "0" (step ST61; YES), the classification determining unit 109 classifies the determination result as Case 1 (step ST62). In contrast, if all the test results are not "0" (step ST61; NO), the classification determining unit 109 determines whether or not the first test result is "1" and either of the second test result and the third test result is "0" (step ST63). If the first test result is "1" and either of the second test result and the third test result is "0" (step ST63; YES), the classification determining unit 109 classifies the determination result as Case 2 (step ST64).

In contrast, if the test results correspond to that the first test result is "1" and either of the second test result and the third test result is not "0" (step ST63; NO), the classification determining unit 109 determines which of the second test result and the third test result is "0" (step ST65). If the first test result is "0" and either of the second test result and the third test result is "0" (step ST65; YES), the classification determining unit 109 classifies the determination result as Case 3 (step ST66).

In contrast, if the test results correspond to that the first test result is "0" and either of the second test result and the third test result is not "0" (step ST65; NO), the classification determining unit 109 classifies the determination result as Case 4 (step ST67). The classification determining unit 109 stores the determination result classified in step ST62, step ST64, step ST66, or step ST67 as a validity determination result in the determination result storing unit 110 (step ST68). Subsequently, the flowchart proceeds to the process in step ST11 of the flowchart of FIG. 10.

Next, details of the process in step ST12 of the flowchart of FIG. 10 will be explained.

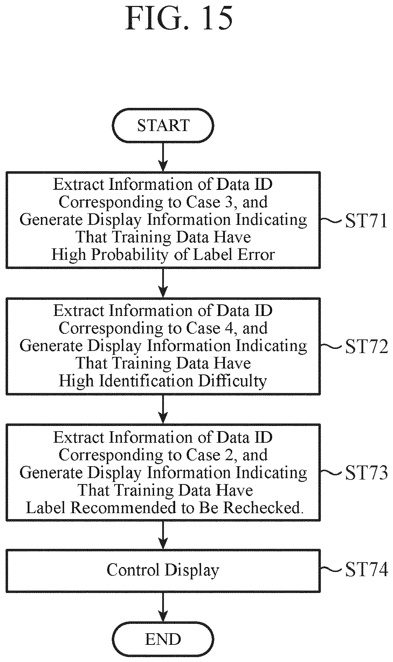

FIG. 15 is a flowchart illustrating the operation of the visualization unit 111 of the reliability evaluation device 100 according to the first embodiment.

The visualization unit 111 refers to the validity determination result, extracts information on data IDs corresponding to Case 3, and generates display information indicating that the training data have a high probability of label error (step ST71). Subsequently, the visualization unit 111 refers to the validity determination result, extracts information on data IDs corresponding to Case 4, and generates display information indicating that the training data have a high identification difficulty (step ST72).

Subsequently, the visualization unit 111 refers to the validity determination result, extracts information on data IDs corresponding to Case 2, and generates display information indicating that the training data have a label recommended to be rechecked (step ST73). The visualization unit 111 performs control to display the display information generated in steps ST71 to ST73 on a display device (not illustrated), for example (step ST74), and terminates the process.

As described above, according to the first embodiment, the reliability evaluation device includes: the training data storing unit 102 for storing training data constituted by a set of data and a label, the label being information relating to the data and assigned to identify an object to be identified; the learning unit 103 for performing a dropout process on a neural network model to be learned by applying a preset dropout parameter, repeating learning for classifying the label by using the training data, and performing iterative learning until the learning converges; the model reconstructing unit 105 for reconstructing a learned model in accordance with the dropout parameter and generating a plurality of different reconstructed models, the learned model being a neural network model for which the iterative learning has converged; the identification unit 107 for identifying the training data by using the generated reconstructed models, and estimating a label for each of the reconstructed models; and the classification determining unit 109 for evaluating a label of the training data on the basis of the estimated labels, and classifying the label of the training data.

As a result, in evaluation of the reliability of a label of given training data, a plurality of kinds of models can be efficiently generated, and the reliability of the label of the training data can be evaluated in addition to the difficulty in identifying the training data.

In addition, according to the first embodiment, the identification unit 107 identifies the training data in the reconstructed models, obtains an index value for each label in the reconstructed models when the identification is performed, and sets a label giving a largest index value of the obtained index values as the estimated label, and the classification determining unit 109 classifies a label of the training data on the basis of three evaluations, the evaluations being whether the estimated label in each of the reconstructed models is identical to the label of the training data, distributions of sequences of the index values among the reconstructed models, and whether a difference in ratio is present between the index value associated with the label of the training data and the index value of the estimated label.

As a result, the validity of the label of the training data can be efficiently classified by using the estimated labels in a plurality of reconstructed models.

In addition, according to the first embodiment, the visualization unit that performs display control to prompt processing of training data on the basis of the result of classification performed by the classification determining unit 109 is included.

As a result, a suggestion that the training data should be processed can be given to the user.

Note that any components in the embodiment of the present invention can be modified, and any components in the embodiment can be omitted within the scope of the invention.

### INDUSTRIAL APPLICABILITY

The technology according to the present invention is preferably applied to a system or the like that performs machine learning using training data to which a label of an object to be identified is assigned.

### REFERENCE SIGNS LIST

100: reliability evaluation device, 101: dropout parameter obtaining unit, 102: training data storing unit, 103: learning unit, 104: learned model storing unit, 105: model reconstructing unit, 106: reconstructed model storing unit, 107: identification unit, 108: estimated label information storing unit, 109: classification determining unit, 110: determination result storing unit, 111: visualization unit

## Claims

1. A reliability evaluation device comprising:
a training data storing unit for storing training data constituted by a set of data and a label, the label being information relating to the data and assigned to identify an object to be identified;
a learning unit for performing a dropout process on a neural network model to be learned by applying a preset dropout parameter, repeating learning for classifying the label by using the training data, and performing iterative learning until the learning converges;
a model reconstructing unit for reconstructing a learned model in accordance with the dropout parameter and generating a plurality of different reconstructed models, the learned model being a neural network model for which the iterative learning performed by the learning unit has converged;
an identification unit for identifying the training data by using the reconstructed models generated by the model reconstructing unit, and estimating a label for each of the reconstructed models; and
a classification determining unit for evaluating a label of the training data on a basis of the estimated labels obtained by the estimation by the identification unit and classifying the label of the training data.

2. The reliability evaluation device according to claim 1, wherein
the identification unit identifies the training data in the reconstructed models, obtains an index value for each label in the reconstructed models when the identification was performed, and sets a label giving a largest index value of the obtained index values as the estimated label, and
the classification determining unit classifies a label of the training data on a basis of three evaluations, the evaluations being whether the estimated label in each of the reconstructed models is identical to the label of the training data, distributions of sequences of the index values between the reconstructed models, and whether a difference in ratio is present between the index value associated with the label of the training data and the index value of the estimated label.

3. The reliability evaluation device according to claim 1 or 2, further comprising:
a visualization unit for performing display control to prompt processing of the training data on a basis of a result of classification of the classification determining unit.

4. The reliability evaluation device according to claim 3, wherein
the visualization unit performs display control indicating whether the training data are training data with high probability of label error, training data with high identification difficulty, or training data with the label being recommended to be rechecked on the basis of the result of classification of the classification determining unit.

5. A reliability evaluation method comprising:
performing, by a learning unit, a dropout process on a neural network model to be learned by applying a preset dropout parameter, repeating learning for classifying a label by using training data constituted by a set of data and the label, and performing iterative learning until the learning converges, the label being information relating to the data and assigned to identify an object to be identified;
reconstructing, by a model reconstructing unit, a learned model in accordance with the dropout parameter and generating a plurality of different reconstructed models, the learned model being a neural network model for which the iterative learning has converged;
identifying, by an identification unit, the training data by using the generated reconstructed models, and estimating a label for each of the reconstructed models; and
evaluating, by a classification determining unit, a label of the training data on a basis of the estimated labels, and classifying the label of the training data.
